# EUROPÄISCHE PATENTANMELDUNG

(11) **EP 0 717 540 A2**
(43) Veröffentlichungstag der Anmeldung: **19.06.1996**
(21) Anmeldenummer: 95203300.9
(22) Anmeldetag: 30.11.1995
(51) Int. Cl.: H04M 1/65

(54) **Anrufbeantworter**

(30) Priorität: 16.12.1994 DE 4444871
(71) Anmelder: Philips Patentverwaltung GmbH, 22335 Hamburg (DE); PHILIPS ELECTRONICS N.V., 5621 BA Eindhoven (NL)
(72) Erfinder: Gamm, Stephan, c/o Philips Patentverwaltung GmbH, D-22335 Hamburg (DE); Häb-Umbach, Reinhold, Dr., c/o Philips Patentverw., D-22335 Hamburg (DE)
(74) Vertreter: Volmer, Georg, Dipl.-Ing.

(57) **Zusammenfassung**

Die Erfindung bezieht sich auf einen Anrufbeantworter mit Mitteln (11, 13, 14) zur Auswertung von über einen Telefonkanal (2) übertragenen Fernsteuersignalen, die zur Fernsteuerung des Anrufbeantworters von einem Benutzer am entfernten Ende des Telefonkanals (2) erzeugt werden. Es sind Sprachansagemittel (15, 17) zur Erzeugung von Sprachansagen für den Benutzer vorgesehen. Weiterhin dient eine Steuereinheit (11), die zur Aktivierung und/oder Deaktivierung von Funktionen des Anrufbeantworters in Abhängigkeit von den detektierten Fernsteuersignalen.

Um die Fernsteuerbarkeit des Anrufbeantworters auch bei einem wenig geübten Benutzer sicherzustellen, sind die Sprachansagen beim Vorliegen eines Zeitraums mit vorgebbarer Mindestlänge ohne eine Erkennung eines Fernsteuersignals oder beim Vorliegen eines nicht einer Funktion des Anrufbeantworters zuordenbaren Fernsteuersignals während eines Fernsteuerungsvorgangs zur Ausgabe eines Menüs (28) vorgesehen. Das Menü dient zum Hinführen auf Fernsteuersignale, denen Funktionen des Anrufbeantworters zuordenbar sind.

## Beschreibung

Die Erfindung betrifft einen Anrufbeantworter mit Mitteln zur Auswertung von über einen Telefonkanal übertragenen Fernsteuersignalen, die zur Fernsteuerung des Anrufbeantworters von einem Benutzer am entfernten Ende des Telefonkanals erzeugt werden, Sprachansagemitteln zur Erzeugung von Sprachansagen für den Benutzer und einer Steuereinheit, die zur Aktivierung und/oder Deaktivierung von Funktionen des Anrufbeantworters in Abhängigkeit von den detektierten Fernsteuersignalen vorgesehen ist.

Anrufbeantworter sind Endgeräte, die parallel zu Telefonen geschaltet werden und die für den Fall, daß ein eingehender Anruf nicht mit Hilfe des parallelen Telefons angenommen wird, die Möglichkeit bieten, daß der Anrufer mit Hilfe des Anrufbeantworters zunächst eine vorher aufgezeichnete Nachricht abhört und danach gegebenenfalls eine Nachricht hinterlegen kann. Es ist bekannt, Anrufbeantworter so auszugestalten, daß sie zur Abfrage von eingegebenen Nachrichten oder zur Aktivierung sonstiger Funktionen über eine durchgeschaltete Telefonleitung auch aus der Ferne bedient werden können. Dieses Leistungsmerkmal wird auch als Fernabfrage bezeichnet.

Aus der US 5,220,595 ist ein Anrufbeantworter mit der Möglichkeit einer Fernabfrage bekannt. Der Fernabfragemodus ist durch eine persönliche Identifizierungsnummer (PIN) geschützt, die bei einem eingegangenen Anruf nach der Ausgabe einer Nachricht durch den Anrufbeantworter mit Hilfe von Mehrfrequenz-Signalen (DTMF, "Dual Tone Multi Frequency") zur Aktivierung des Fernabfragemodus eingegeben werden muß. Nach Eingabe der korrekten persönlichen Identifizierungsnummer wird der Anrufer aufgefordert, als Fernsteuersignal ein Sprachsignal einzugeben. Es existiert ein fester Satz von Sprachsignalen, mit denen jeweils eine bestimmte Funktion des Anrufbeantworters aktivierbar ist. Jeder Funktion des Anrufbeantworters ist genau ein Sprachsignal zugeordnet. Bei einem solchen Anrufbeantworter ist die Bedienung im Fernabfragemodus schwierig, da der Benutzer die den Funktionen des Anrufbeantworters zugeordneten Sprachkommandos auswendig kennen muß.

Der Erfindung liegt daher die Aufgabe zugrunde, einen Anrufbeantworter zu schaffen, dessen Fernsteuerbarkeit auch bei einem wenig geübten Benutzer sichergestellt ist.

Die Aufgabe wird bei einem erfindungsgemäßen Anrufbeantworter dadurch gelöst, daß die Sprachansagen beim Vorliegen eines Zeitraums mit vorgebbarer Mindestlänge ohne Erkennung eines Fernsteuersignals oder beim Vorliegen eines nicht einer Funktion des Anrufbeantworters zuordenbaren Fernsteuersignals während eines Fernsteuerungsvorgangs zur Ausgabe eines Menüs dienen, das zum Hinführen auf Fernsteuersignale dient, denen Funktionen des Anrufbeantworters zuordenbar sind.

Bei ungeübten Benutzern tritt bei der Fernsteuerung des Anrufbeantworters häufig das Problem auf, daß der Benutzer ein einer bestimmten Funktion zugeordnetes Fernsteuersignal nicht kennt. Dann wird der Benutzer entweder gar kein oder ein falsches Fernsteuersignal über den Telefonkanal an den Anrufbeantworter senden. Die vorgebbare Mindestlänge des Zeitraums, in dem kein Fernsteuersignal vom Anrufbeantworter erkannt wird, ist so zu dimensionieren, daß nach einem solchen Zeitraum ohne erkanntes Fernsteuersignal nicht mehr damit zu rechnen ist, daß der Benutzer ein geeignetes Fernsteuersignal aussendet. In beiden Fällen wird dem Benutzer durch die Ausgabe eines akustischen Menüs mit Hilfe der Sprachansagemittel die Fernsteuerung des Anrufbeantworters erleichtert. Das Menü kann aus einer Ebene oder aus mehreren Ebenen mit Untermenüs bestehen. Die Menüpunkte der jeweils untersten Menüebene eines Menüs weisen auf Fernsteuersignale hin, mit denen eine Aktivierung und/oder Deaktivierung von Funktionen des Anrufbeantworters bewirkt wird. Der Benutzer muß solche Fernsteuersignale nun nicht mehr kennen, um den Anrufbeantworter fernsteuern zu können. Kennt ein geübter Benutzer allerdings die für den jeweiligen Anwendungsfall erforderlichen Fernsteuersignale, die einer Funktion des Anrufbeantworters zugeordnet sind, so kann er den Anrufbeantworter auch ohne das akustische Menü fernsteuern und so die erforderliche Bedienungszeit gegenüber einer Fernsteuerung mit Hilfe des akustischen Menüs verringern.

In Ausgestaltungen des erfindungsgemäßen Anrufbeantworters sind als Fernsteuersignale entweder Mehrfrequenzsignale oder Sprachsignale vorgesehen. In einer weiteren Ausgestaltung sind als Fernsteuersignale wahlweise Mehrfrequenzsignale oder Sprachsignale vorgesehen.

Die Verwendung von Mehrfrequenzsignalen (DTMF-Signalen) als Fernsteuersignale führt dazu, daß die Anzahl der Fälle, in denen die Fernsteuersignale nicht korrekt erkannt werden, äußerst gering ist. Die Verwendung von Sprachsignalen als Fernsteuersignale führt zu einer bequemen und direkten Fernsteuerung des Anrufbeantworters durch den Benutzer. Besonders vorteilhaft ist es, je nach Anwendung sowohl Mehrfrequenzsignale als auch Sprachsignale als Fernsteuersignale zuzulassen. Damit besteht die Möglichkeit, die Ausführung des Fernsteuersignals dem jeweiligen Anwendungsfall anzupassen. Der Benutzer kann selbst wählen, welche Art der Fernsteuerung er benutzen will.

Weiterhin wird die Erfindung dadurch ausgestaltet, daß Mittel zur Selektion eines die Aktivierung und/oder Deaktivierung einer Funktion des Anrufbeantworters bewirkenden Sprachsignals aus einer Menge von aufeinanderfolgenden Sprachsignalen mit in Bezug auf die Fernsteuerung unwirksamen weiteren Bestandteilen vorgesehen sind.

Dies führt dazu, daß der Benutzer bei der Erzeugung von Sprachsignalen, die zur Fernsteuerung des Anrufbeantworters dienen soll, auch in ganzen Sätzen sprechen kann, von denen aber nur jeweils ein Satzbestandteil eine Aktivierung und/oder Deaktivierung einer Funktion des Anrufbeantworters bewirkt. Das Verfahren zur Selektion eines Sprachsignals aus einer Menge von aufeinanderfolgenden Sprachsignalen ist vorbekannt. Die Integration des Verfahrens in den Anrufbeantworter ist mit geringem technischen Aufwand möglich.

Um die Fernsteuerung des Anrufbeantworters weiter zu erleichtern, sind einer Funktion des Anrufbeantworters verschiedene Fernsteuersignale zugeordnet.

So kann der Benutzer beispielsweise mit unterschiedlichen Sprachsignalen (Worten) die Aktivierung einer Funktion des Anrufbeantworters auslösen. Dies ist sinnvoll, da für ein bestimmtes Sprachsignal häufig ein oder mehrere Synonyme mit gleicher oder ähnlicher Bedeutung vorhanden sind. Die Fälle, in denen ein für den Anrufbeantworter nicht verständliches Fernsteuersignal verwendet wird, werden somit weitestgehend vermieden.

Ist bei dem erfindungsgemäßen Anrufbeantworter jederzeit während der Menüausgabe unter Ungehung des vollständigen Menüpfades durch ein geeignetes Fernsteuersignal eine Aktivierung und/oder Deaktivierung einer Funktion des Anrufbeantworters auslösbar, ergibt sich der Vorteil, daß die Ausgabe des Menüs von einem Benutzer gestoppt werden kann, wenn dieser sich während der Menüausgabe an ein zulässiges Fernsteuersignal erinnert, dem die gewünschte Funktion des Anrufbeantworters zugeordnet ist. Die unter Umständen zeitaufwendige Ausgabe eines vollständigen Menüpfades kann somit vermieden werden. Insbesondere bei geübten Benutzern ergeben sich viele Anwendungsfälle, in denen der Zeitaufwand zur Fernsteuerung des Anrufbeantworters verringert wird.

Ein Ausführungsbeispiel der Erfindung wird nachstehend anhand der Zeichnungen näher erläutert. Es zeigen:
- Fig. 1: das Blockschaltbild eines erfindungsgemäßen Anrufbeantworters und
- Fig. 2: ein Flußablaufdiagramm zur Erläuterung einer Fernsteuerung des Anrufbeantworters.

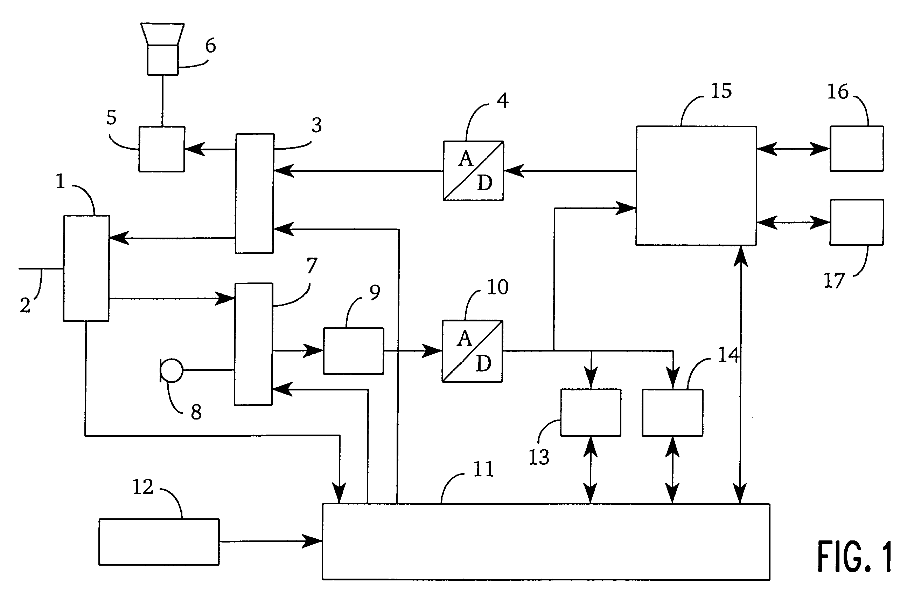

Das Blockschaltbild nach Fig. 1 zeigt den Aufbau des erfindungsgemäßen Anrufbeantworters mit seinen wesentlichen Bestandteilen. Er enthält eine Leitungsschnittstelle 1 zum Anschluß des Anrufbeantworters an einen Telefonanschluß bzw. eine Telefonleitung 2. Eine Schalteinheit 3 schaltet das analoge Ausgangssignal eines Analog-Digital-Umsetzers 4 entweder auf die Leitungsschnittstelle 1 oder einen Verstärker 5 durch, dessen Ausgangssignal einem Lautsprecher 6 zugeführt wird. Über den Lautsprecher 6 werden Sprachsignale am Ort des Anrufbeantworters ausgegeben, z.B. zum Abhören eingegangener und im Anrufbeantworter abgespeicherter Nachrichten.

Ein über die Telefonleitung 2 von der Leitungsschnittstelle 1 empfangenes Signal wird einer Schalteinheit 7 zugeführt, die entweder dieses Empfangssignal oder ein Mikrofonsignal eines Mikrofons 8 einer Verstärkungsregelungseinheit 9 zuführt, die die ihr zugeführten Signale auf einen vorgebbaren Pegel normiert. Das Mikrofon 8 dient zum Empfang von Sprachsignalen am Ort des Anrufbeantworters, z.B. zur Aufzeichnung von Ansagetexten. Die Verstärkungsregelungseinheit 9 ist ausgangsseitig mit einem Analog-Digital-Umsetzer 10 gekoppelt, der eine Digitalisierung der Ausgangssignale der Verstärkungsregelungseinheit 9 durchführt.

Eine Steuereinheit 11 dient zur zentralen Steuerung der Funktionen des Anrufbeantworters. Sie wird insbesondere durch eine Mikroprozessorschaltung realisiert. Die Steuereinheit 11 ist mit der Leitungsschnittstelle 1 gekoppelt und wertet insbesondere aus, ob ein von dem Anrufbeantworter anzunehmender Anruf vorliegt. Die Steuereinheit 11 steuert die Schaltzustände der Schalteinheiten 3 und 7. Mit Hilfe der Eingabeeinheit 12 werden der Steuereinheit 11 Steuersignale zugeführt, die eine Aktivierung oder Deaktivierung von Funktionen des Anrufbeantworters bewirken. Die Eingabeeinheit 12 ist im vorliegenden Fall durch eine Tastatur realisiert. Die Steuereinheit 11 ist weiterhin mit einer Sprachsignalanalyseeinheit 13, einer Mehrfrequenzsignalanalyseeinheit 14 und einer Codier-Decodier-Einheit (Codec) 15 gekoppelt. Diesen Einheiten 13, 14 und 15 werden Ausgangssignale des Analog-Digital-Umsetzers 10 zugeführt.

Die Codier-Decodier-Einheit 15 ist mit einer Speichereinheit 16 zur Speicherung von Nachrichten und einer Speichereinheit 17 zur Speicherung von Ansagetexten gekoppelt, wobei diese Speichereinheiten 16 und 17 insbesondere durch RAM-Speicher realisiert sind. Die Codier-Decodier-Einheit 15 dient in Abhängigkeit von Steuersignalen der Steuereinheit 11 entweder zur Codierung von Ausgangssignalen des Analog-Digital-Umsetzers 10 oder zur Decodierung der in den Speichereinheiten 16 und 17 abgelegten Nachrichten oder Ansagetexte. Beim Codiervorgang werden Sprachsignale zur Datenreduktion komprimiert und entweder in der Speichereinheit 16 oder in der Speichereinheit 17 abgelegt. Beim Decodieren werden die in den Speichereinheiten 16 oder 17 abgelegten Nachrichten- oder Ansagetexte wieder dekomprimiert und dann dem Digital-Analog-Umsetzer 4 zugeführt.

Wird von der Leitungsschnittstelle 1 ein Anruf für den Anrufbeantworter empfangen, veranlaßt die Steuereinheit 11 die Codier-Decodier-Einheit 15, einen in der Speichereinheit 17 abgelegten Ansagetext zu decodieren und den decodierten bzw. dekomprimierten Ansagetext dem Digital-Analog-Umsetzer 4 zuzuführen. Die Steuereinheit 11 steuert in diesem Zustand des Anrufbeantworters die Schalteinheit 3 so, daß der in analoger Form am Ausgang des Digital-Analog-Umsetzers 4 ausgegebene Ansagetext über die Leitungsschnittstelle 1 und die Telefonleitung 2 an den Anrufenden bzw. Benutzer übertragen wird.

Nach dem Ausgeben des Ansagetextes hat der Benutzer am entfernten Ende der Telefonleitung 2 die Möglichkeit, in der Speichereinheit 16 eine Nachricht abzuspeichern. Eine solche Nachricht wird von der Leitungsschnittstelle 1 empfangen und an die Schalteinheit 7 weitergeleitet, die ein solches Signal der Verstärkungsregelungseinheit 9 zuführt. Nach einer Digitalisierung durch den Analog-Digital-Umsetzer 10 wird die Nachricht von der Codier-Decodier-Einheit 15 komprimiert und in der Speichereinheit 16 gespeichert.

Beim erfindungsgemäßen Anrufbeantworter besteht allerdings auch die Möglichkeit einer Fernsteuerung durch den Benutzer am entfernten Ende der Telefonleitung 2. Dazu muß dieser zunächst entweder ein Schlüsselwort oder eine persönliche Identifizierungsnummer (PIN) mit Hilfe von Sprach- bzw. Mehrfrequenzsignalen (DTMF-Signalen) an den Anrufbeantworter übertragen. Nach der Übertragung über die Leitungsschnittstelle 1, die Schalteinheit 7, die Verstärkungsregelungseinheit 9 und den Analog-Digital-Umsetzer 10 werden das Schlüsselwort bzw. die persönliche Identifizierungsnummer der Sprachsignalanalyseeinheit 13 und der Mehrfrequenzsignalanalyseeinheit 14 zugeführt. Die Sprachsignalanalyseeinheit 13 dient zur Auswertung von empfangenen Sprachsignalen. Sie erkennt, ob ein geeignetes Schlüsselwort für die Umschaltung des Anrufbeantworters in seinen Fernsteuerungsmodus insbesondere zur Fernabfrage des Anrufbeantworters übertragen wurde. Die Mehrfrequenzsignalanalyseeinheit 14 dient zur Auswertung von empfangenen Mehrfrequenzsignalen. Sie erkennt analog zur Sprachsignalanalyseeinheit 13, ob eine geeignete persönliche Identifizierungsnummer übertragen wurde. Die Auswertungsergebnisse der Sprachsignalanalyseeinheit 13 und der Mehrfrequenzsignalanalyseeinheit 14 werden der Steuereinheit 11 mitgeteilt. Ist ein geeignetes Schlüsselwort von der Sprachsignalanalyseeinheit 13 oder eine geeignete persönliche Identifizierungsnummer durch die Mehrfrequenzsignalanalyseeinheit 14 detektiert worden, steuert die Steuereinheit 11 den Anrufbeantworter in seinen Fernsteuerungsmodus.

Im Fernsteuerungs- bzw. Fernabfragemodus kann der Benutzer am entfernten Ende der Telefonleitung 2 mit Hilfe von Mehrfrequenz- oder Sprachsignalen, die von der Sprachsignalanalyseeinheit 13 bzw. von der Mehrfrequenzsignalanalyseeinheit 14 detektiert und ausgewertet werden, eine Aktivierung und/oder eine Deaktivierung von Funktionen des Anrufbeantworters bewirken, z.B. das Löschen oder Wiederholen einer in der Speichereinheit 16 abgelegten Nachricht.

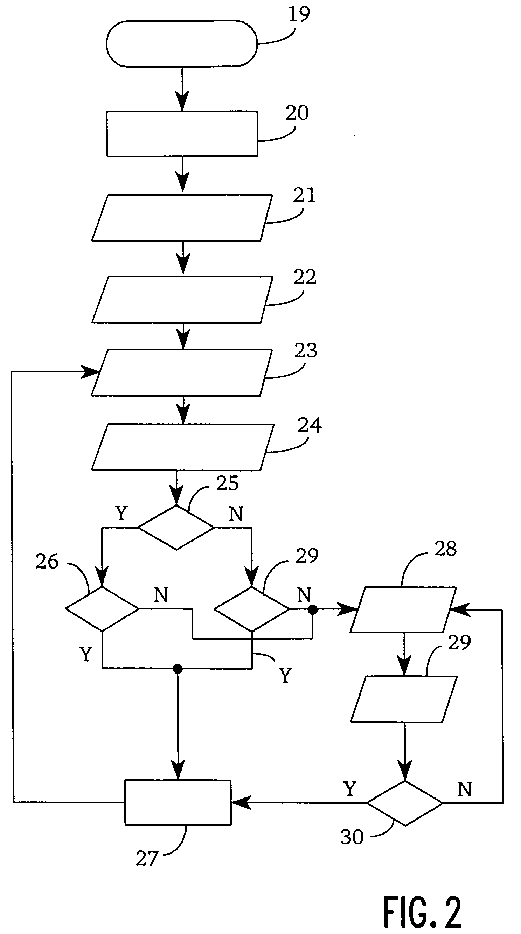

Die Fernsteuerung des Anrufbeantworters wird im folgenden anhand des Flußdiagramms in Fig. 2 näher erläutert.

Der Schritt 19 stellt in Fig. 2 den Ruhezustand des Anrufbeantworters dar. Im Schritt 20 wird vom Anrufbeantworter ein Ruf empfangen. Dies bewirkt im Schritt 21 die Ausgabe eines Ansagetextes, der vorher in der Speichereinheit 17 gespeichert worden ist und mit dem der Benutzer über die Abwesenheit des Telefoninhabers und die Möglichkeit, eine Nachricht auf Band zu sprechen, informiert wird. Nachdem die Ausgabe des Ansagetextes beendet ist, wird vom Benutzer im Schritt 22 ein ein Sprachsignal darstellendes Schl üsselwort oder eine persönliche Identifikationsnummer als Mehrfrequenzsignal (DTMF-Signal) an den Anrufbeantworter übertragen und von diesem mit Hilfe der Sprachsignalanalyseeinheit 13 bzw. der Mehrfrequenzsignalanalyseeinheit 14 ausgewertet. Ist ein zur Fernsteuerung bzw. Fernabfrage des Anrufbeantworters berechtigendes Schlüsselwort oder eine entsprechende persönliche Identifikationsnummer (PIN) übertragen und vom Anrufbeantworter auch als solche erkannt worden, wird in Schritt 23 der Benutzer mit Hilfe einer in der Speichereinheit 17 abgespeicherten Ansage zur Eingabe einer Anweisung aufgefordert. In Schritt 24 erfolgt die Eingabe einer Anweisung durch den Benutzer, in dem dieser ein Fernsteuersignal an den Anrufbeantworter überträgt. Die Fernsteuersignale können wahlweise Mehrfrequenzsignale oder Sprachsignale sein. Eine Fernsteuerung nur mit Hilfe von Mehrfrequenzsignalen oder nur mit Hilfe von Sprachsignalen ist auch möglich.

In Schritt 25 wird danach mit Hilfe der Steuereinheit 11, der Sprachsignalanalyseeinheit 13 und der Mehrfrequenzsignalanalyseeinheit 14 überprüft, ob das übertragene Fernsteuersignal ein Mehrfrequenzsignal ist. Ist das Fernsteuersignal ein Mehrfrequenzsignal (Y), wird in Schritt 26 ermittelt, ob das übertragene Mehrfrequenzsignal ein gültiges Fernsteuersignal darstellt, d.h. ob dem Mehrfrequenzsignal eine Funktion des Anrufbeantworters zugeordnet ist. Wird diese Frage bejaht (Y), führt der Anrufbeantworter im Schritt 27 eine Aktivierung oder Deaktivierung der zugeordneten Funktion und die Funktion selbst aus. Nach der Ausführung des Schrittes 27 wird der Programmablauf mit Schritt 23 fortgesetzt.

Wird in Schritt 26 die Frage verneint (N), ob ein gültiges Mehrfrequenzsignal vorliegt, wird der Programmablauf mit Schritt 28 fortgesetzt, dessen Erläuterung später erfolgt. Wird in Schritt 25 festgestellt, daß kein Mehrfrequenzsignal sondern ein Sprachsignal vorliegt (N), erfolgt in Schritt 29 die Überprüfung, ob als Fernsteuersignal ein gültiges Sprachsignal vorliegt. Wird diese Frage verneint (N), wird das Programm ebenfalls mit Schritt 28 fortgesetzt. Wird die Frage in Schritt 29 bejaht (Y), d.h. liegt ein gültiges Sprachsignal vor, wird in Schritt 27 die diesem Sprachsignal zugeordnete Funktion aktiviert und ausgeführt oder gegebenenfalls deaktiviert.

Die Fortführung des Programmablaufs mit Schritt 28 setzt voraus, daß vorher in Schritt 26 oder Schritt 29 festgestellt wurde, daß ein nicht einer Funktion des Anrufbeantworters zuordenbares und damit unzulässiges Fernsteuersignal vorliegt. Ein Zeitraum einer vorgebbaren Mindestlänge, in dem kein Fernsteuersignal erkannt wird (Signalpause), gilt in den Schritten 26 und 29 ebenfalls als unzulässiges Fernsteuersignal. In diesen Fällen hat der Benutzer Schwierigkeiten bei der Fernsteuerung des Anrufbeantworters. Um dem Benutzer die Fernsteuerung des Anrufbeantworters zu erleichtern, wird nun in Schritt 28 ein akustisches Menü an den Benutzer mit Hilfe von in der Speichereinheit 17 abgespeicherten Sprachsignalen ausgegeben. Mit einem solchen Menü wird der Benutzer auf Fernsteuersignale hingeführt, denen Funktionen des Anrufbeantworters zugeordnet sind. Das Menü besteht entweder nur aus einer Menüebene oder auch aus mehreren Menüebenen mit Untermenüs. Bei der akustischen Ausgabe des Menüs werden dem Benutzer mit Hilfe der einzelnen Menüpunkte einer Menüebene Fernsteuersignale vorgeschlagen, die entweder einen Sprung in ein Untermenü bewirken oder die Aktivierung/Deaktivierung einer Funktion des Anrufbeantworters bewirken. In der untersten Menüebene werden dem Benutzer mit Hilfe der einzelnen Menüpunkte nur Fernsteuersignale angeboten, die einer Funktion des Anrufbeantworters direkt zugeordnet sind und damit deren Aktivierung oder Deaktivierung bewirken. In Schritt 29 wählt der Benutzer mit Hilfe eines Fernsteuersignals einen Menüpunkt einer Menüebene aus. Er kann allerdings in Schritt 29 auch unter Umgehung des jeweiligen vollständigen Menüpfades jederzeit direkt ein einer Funktion des Anrufbeantworters zugeordnetes Fernsteuersignal an den Anrufbeantworter senden. In Schritt 30 wird überprüft, ob dem übertragenen Fernsteuersignal eine Funktion des Anrufbeantworters zugeordnet ist. Ist dies der Fall (Y), wird der Programmablauf mit Schritt 27 fortgesetzt. Wurde in Schritt 29 ein Untermenüpunkt gewählt oder kein zulässiges Fernsteuersignal übertragen, erfolgt ein Sprung zurück zum Schritt 28, entweder in das gewählte Untermenü oder in die gleiche noch einmal zu wiederholende Menüebene.

Die Sprachsignalanalyseeinheit 13 ist bei der Auswertung eines als Sprachsignal ausgeführten Fernsteuersignals in Schritt 29 auch in der Lage, aus einer Menge von aufeinanderfolgenden Sprachsignalen (z.B. ganzen Sätzen) mit in Bezug auf die Fernsteuerung unwirksamen Sprachsignalen die Sprachsignale (z.B. einzelne Worte) zu selektieren, mit denen die Aktivierung und/oder Deaktivierung einer Funktion des Anrufbeantworters bewirkt werden kann. Die Fernsteuersignale müssen somit keine isolierten Worte sein. Ein solches Verfahren zur Selektion eines Sprachsignals aus einer Menge von Sprachsignalen ist aus dem Artikel "Automatic Recognition of Keyword in Unconstrained Speech Using Hidden Markov Models", IEEE Transactions on Acoustics, Speech, and Signal Processing, Vol. 38, No. 11, Nov. 1990, Seiten 1870 bis 1878 von J.G. Wilpon, L.R. Rabiner, C.-H. Lee und E.R. Goldman bekannt. Weiterhin können einer Funktion des Anrufbeantworters verschiedene Fernsteuersignale (insbesondere Sprachsignale) zugeordnet werden. Beispielsweise bewirken die Sprachkommandos "löschen", "streichen" oder "radieren" die gleiche Funktion, nämlich das Löschen der eingegangenen und gespeicherten Nachrichten. Diese zuletzt beschriebenen Merkmale des Anrufbeantworters erlauben eine eher intuitive Bedienung, da die Spracheingabe weniger stark reglementiert ist.

## Patentansprüche

1. Anrufbeantworter mit Mitteln (11, 13, 14) zur Auswertung von über einen Telefonkanal (2) übertragenen Fernsteuersignalen, die zur Fernsteuerung des Anrufbeantworters von einem Benutzer am entfernten Ende des Telefonkanals (2) erzeugt werden, Sprachansagemitteln (15, 17) zur Erzeugung von Sprachansagen für den Benutzer und einer Steuereinheit (11), die zur Aktivierung und/oder Deaktivierung von Funktionen des Anrufbeantworters in Abhängigkeit von den detektierten Fernsteuersignalen vorgesehen ist,
dadurch gekennzeichnet,
daß die Sprachansagen beim Vorliegen eines Zeitraums mit vorgebbarer Mindestlänge ohne eine Erkennung eines Fernsteuersignals oder beim Vorliegen eines nicht einer Funktion des Anrufbeantworters zuordenbaren Fernsteuersignals während eines Fernsteuerungsvorgangs zur Ausgabe eines Menüs (28) dienen, das zum Hinführen auf Fernsteuersignale dient, denen Funktionen des Anrufbeantworters zuordenbar sind.

2. Anrufbeantworter nach Anspruch 1,
dadurch gekennzeichnet,
daß als Fernsteuersignale Mehrfrequenzsignale vorgesehen sind.

3. Anrufbeantworter nach Anspruch 1,
dadurch gekennzeichnet,
daß als Fernsteuersignale Sprachsignale vorgesehen sind.

4. Anrufbeantworter nach einem der Ansprüche 1 bis 3,
dadurch gekennzeichnet,
daß als Fernsteuersignale wahlweise Mehrfrequenzsignale oder Sprachsignale vorgesehen sind.

5. Anrufbeantworter nach einem der Ansprüche 1, 3 oder 4,
dadurch gekennzeichnet,
daß Mittel (13) zur Selektion eines die Aktivierung und/oder Deaktivierung einer Funktion des Anrufbeantworters bewirkenden Sprachsignals aus einer Menge von aufeinanderfolgenden Sprachsignalen mit in Bezug auf die Fernsteuerung unwirksamen weiteren Bestandteilen vorgesehen sind.

6. Anrufbeantworter nach einem der Ansprüche 1 bis 5,
dadurch gekennzeichnet,
daß einer Funktion des Anrufbeantworters verschiedene Fernsteuersignale zugeordnet sind.

7. Anrufbeantworter nach einem der Anspüche 1 bis 6,
dadurch gekennzeichnet,
daß jederzeit während der Menüausgabe unter Umgehung des vollständigen Menüpfades durch ein geeignetes Fernsteuersignal eine Aktivierung und/oder Deaktivierung einer Funktion des Anrufbeantworters auslösbar ist.
